Europäisches Patentamt

European Patent Office

Office européen des brevets

(11) Publication number: **0 445 892 A1**

# EUROPEAN PATENT APPLICATION

(21) Application number: 91200486.8

(51) Int. Cl.⁵: **A22C 17/12**

(22) Date of filing: 05.03.91

(30) Priority: 05.03.90 NL 9000506
10.10.90 NL 9002208

(43) Date of publication of application:
11.09.91 Bulletin 91/37

(84) Designated Contracting States:
BE DK GB NL

(71) Applicant: STORK LANGEN B.V.
Beversestraat 4
NL-5431 SH Cuijk (NL)

(72) Inventor: Langen, Christianus Petrus
Zandkampen 11
NL-5431 BB Cuijk (NL)

(74) Representative: Hoorweg, Petrus Nicolaas et
al
OCTROOIBUREAU ARNOLD & SIEDSMA
Sweelinckplein 1
NL-2517 GK The Hague (NL)

(54) Skinning machine.

(57) A machine for skinning meat pieces, which machine comprises a transport roller (4) driven rotatably about a first axis (5) and a pressure roller (10) co-acting with the roller and rotatable about a second axis (11) parallel to the first axis, in addition to at least one cutting beam (19) which is arranged relative to the feed-through direction of the meat piece behind the pinch between the roller and pressure roller and the cutting edge (20) of which runs parallel to the pinch, wherein the pressure roller comprises a number of disc-shaped bodies (15) wherein the or each disc-shaped body is arranged for free up and down movement over a determined distance at least in vertical direction by means of one or more guide members, such that the pressure roller is adapted fully to the local thickness of the meat piece and the pressure on the cutting roller is virtually constant over the whole breadth of the meat piece and the thickness of the skin layer for cutting off is therefore correspondingly as great.

EP 0 445 892 A1

FIG.1

## SKINNING MACHINE

The invention relates to a machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch.

Such machines serve to remove the skin uniformly from meat pieces that are irregular in thickness, this being carried out successfully to a greater or lesser degree. The drawback to the known machines lies however in the irregular thickness of the meat piece, whereby the pressure on the meat can be increased such that more skin is removed than is desired.

The invention has for its object to obviate the above stated drawback with a machine distinguished in that the pressure roller is constructed from a number of disc-shaped bodies, wherein the or each disc-shaped body is arranged for free up and down movement over a determined distance at least in vertical direction by means of one or more guide members.

In a further development it can be advantageous according to the invention to arrange the or each disc-shaped body for free reciprocal movement over a determined distance in horizontal direction.

Because of the separation of the pressure roller into a number of disc-shaped bodies and the slidability of the body in a direction towards and away from the transport roller, it is possible for the pressure roller to adapt fully to the local thickness of the meat piece so that the pressure on the cutting roller is virtually constant over the whole breadth of the meat piece and the thickness of the skin layer for cutting off is therefore correspondingly as great.

In a first embodiment the or each disc-shaped body is mounted according to the invention for free rotation on a hub, which hub is arranged slidably along an axis through the transport roller.

In order to obtain a simple guiding it is recommended to provide the hub with a slotted hole as guide member, in which a non-round rod forming the second axis is fittingly received so that this rod provides the desired vertical slide guiding.

According to a second embodiment guide members are formed according to the invention by one or more guide elements, for instance in the form of a roller or fixed strip, engaging onto the outer periphery of the disc-shaped bodies. The guide elements can here be arranged diametrically opposite each other relative to the or each disc to provide the at least vertical freedom of movement of the disc, although each guide element may also be arranged only on one side of the discs, wherein the disc also acquires horizontal freedom of movement.

In a further embodiment, wherein the disc-shaped bodies are driven rotatably, it is recommended to provide each body with at least one hole arranged eccentrically with respect to the hub, through which hole runs a rotatable carrier member which may or may not be driven for causing the disc-shaped body to rotate. The transporting action of the meat piece through the pinch of the pressure roller and the transport roller is sufficiently ensured herewith despite the free movability of the disc-shaped bodies.

The above mentioned machine is also suitable namely for removing side portions from the piece of meat, resulting in parallel sides. According to the invention a disc-shaped cutting knife is arranged for this purpose between two disc-shaped bodies and mounted rotatably on the axis of the pressure roller. Cutting thus takes place while the meat piece remains under the desired transporting and pressure action of the roller and pressure roller respectively on either side of the cutting knife, whereby control is maintained during skinning. This yields the advantage that the side portions of the meat piece with the removed side edges are also skinned in efficient and reproducible manner, wherein it is even possible not to skin the portion located between the cutting knives.

According to the invention the or each disc-shaped element can have a particular weight of an order such that a sufficient pressure can be applied to the meat piece. On the other hand it is possible to embody the disc-shaped bodies of very light material, in which case the invention proposes to provide the or each disc-shaped element with a pressure element whereof the line of pressure is oriented through the centre of the non-round rod. A pressure force is herewith applied to the meat piece wherein the yielding movement of the disc-shaped element nevertheless remains preserved.

The invention further relates to a machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch and at least one disc-shaped cutting knife rotatable about a lying shaft, wherein the circular cutting knife for removing the side edges of the skin is provided at some distance from the outer periphery with a recessed groove portion into which protrudes the side of the cutting beam. This expedites efficient cutting off of the skin.

Finally, the invention relates to a machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch, which machine is distinguished in that a feed element movable freely up and down is arranged to the front of the pressure roller relative to the feed-through direction of the meat piece. The purpose of this feed element is to exert under the influence of the force of gravity a downward pressure on the meat piece in the direction of the conveyor belt in order to prevent deformation of the meat piece just prior to cutting. The cutting action of the machine is hereby considerably improved.

According to the invention this feed element may take the form of a roller, which roller is preferably arranged as closely as possible to the cutting disc, to which end it is provided with recesses for receiving the cutting edge thereof.

Above mentioned and other features will become apparent and be further elucidated in the figure description hereinbelow of a number of embodiments. In the drawing:

fig. 1 shows a perspective top view of the skinning machine according to the invention with the pressure roller partially removed,

fig. 2 is a standing front view of the pressure roller with transport roller as used with the machine of fig. 1,

fig. 3 and 4 show axial side views of the pressure roller and the roller according to the invention in two different rotation positions,

fig. 5 is an axial side view corresponding with fig. 3 and 4 of an alternative embodiment of the pressure roller,

fig. 6 is an axial side view corresponding with fig. 3-5 of a further embodiment of the pressure roller and roller with alternative guide means,

fig. 7 shows an axial standing section along the arrow VII-VII in fig. 6,

fig. 8 is a top view of the pressure roller in fig. 6,

fig. 9 shows a standing axial section along the line IX-IX in fig. 6 of the transport roller with co-acting cutting knife and cutting beam,

fig. 10 is a part sectional view of the transport roller with cutting beam along the line X-X in fig. 9,

fig. 11 and 12 show respectively a side and front view corresponding with fig. 6 and 7 respectively of an alternative embodiment of the machine according to the invention.

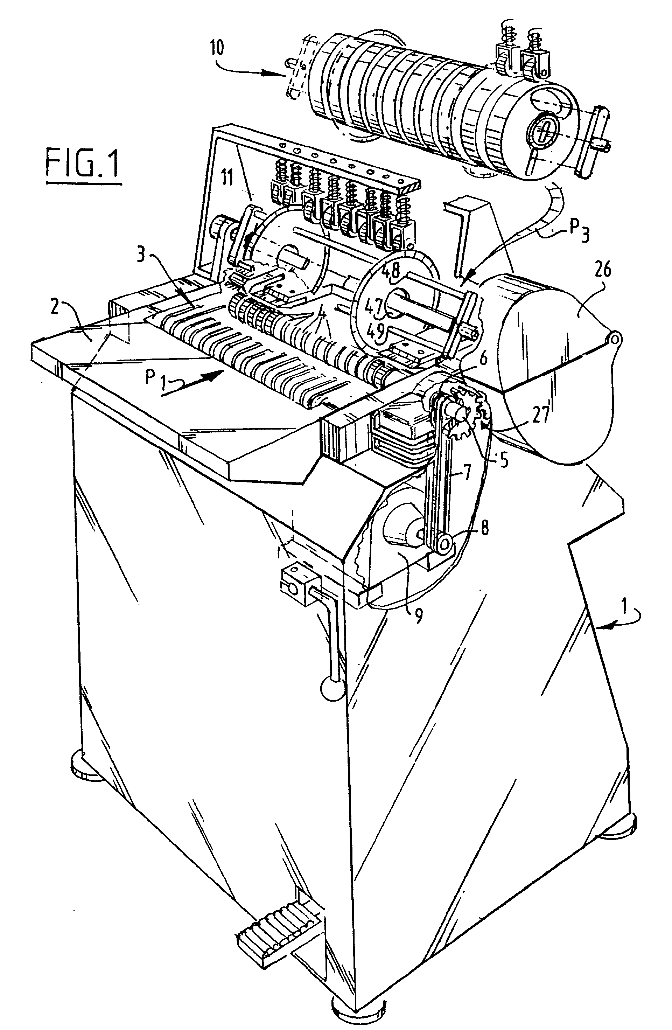

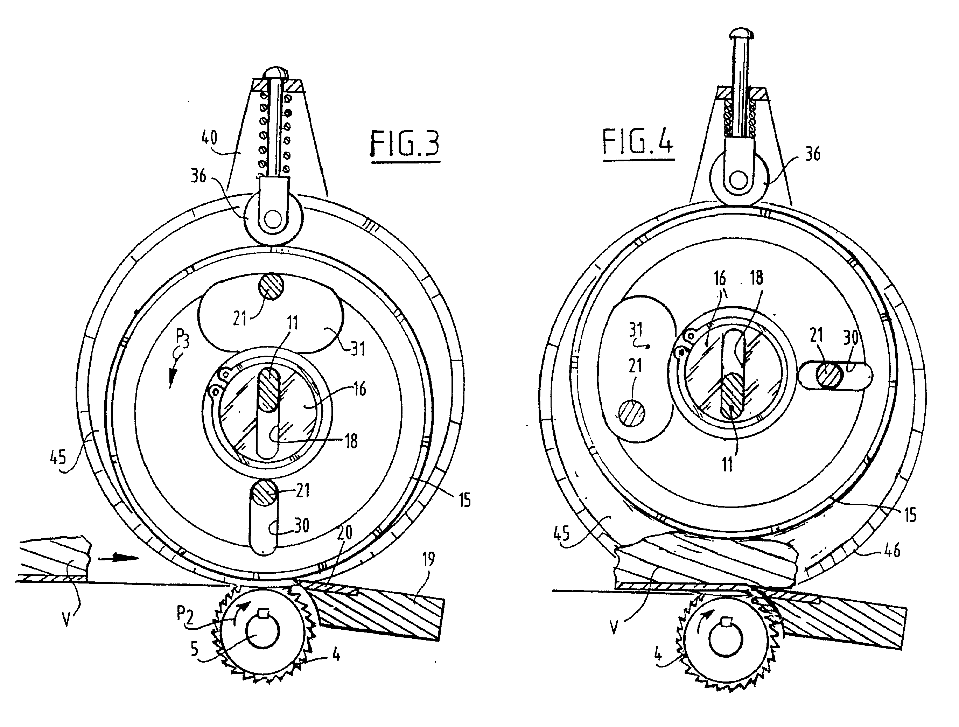

The machine according to fig. 1 consists of a box-like underframe 1 on which is arranged a support plate 2. Operating at the end of the support plate is a conveyor 3 which acts in the direction of the arrow P1 and leads to a transport roller 4 which has a horizontal rotation axis 5 oriented transversely of the conveying direction P1 and which is mounted rotatably in a part of the frame. The end of the rotational axis 5 protruding outside this frame part is provided with a pulley 6 around which are trained ropes 7 which are likewise trained round a rope pulley 8 of an electromotor 9. The rotation of the electromotor is such that the transport roller 4 will turn in the direction of the arrow P2, see fig. 3.

The periphery of the transport roller 4 is given a toothed form. The periphery of the transport roller is moreover provided with grooves at equal mutual intervals between the toothed cylinder mantles.

Arranged above the transport roller 4 is a pressure roller 10 which in fig. 1 is drawn separately of the table 1, 2, but which must be arranged according to arrow P3 about a shaft 11, the axis of which extends parallel to that of the axis 5. The form and function of the pressure roller 10 is further elucidated herebelow.

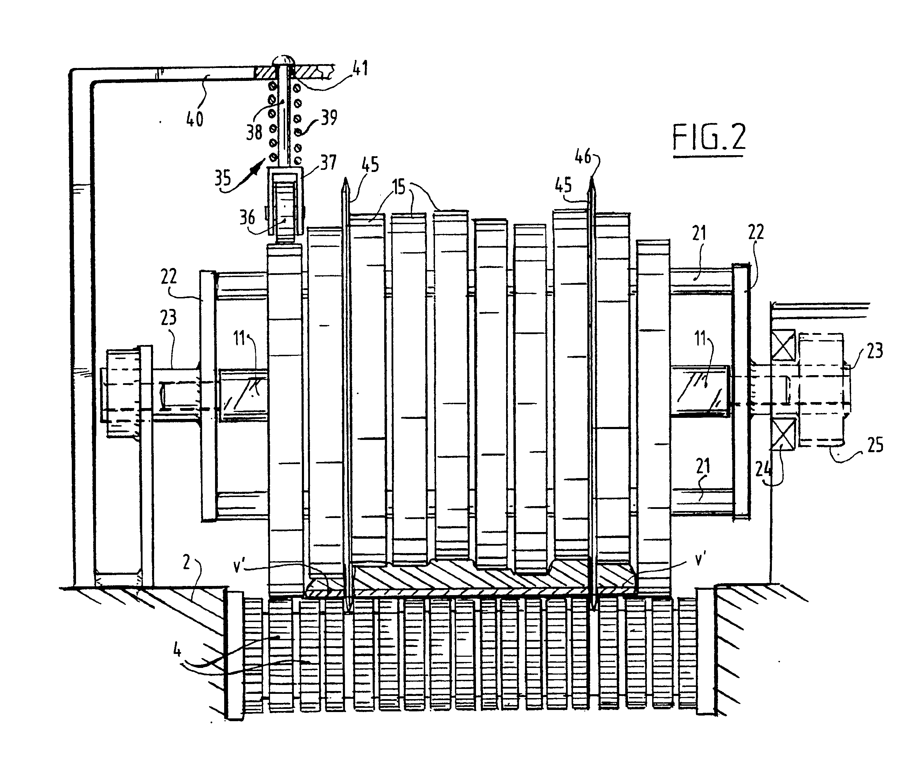

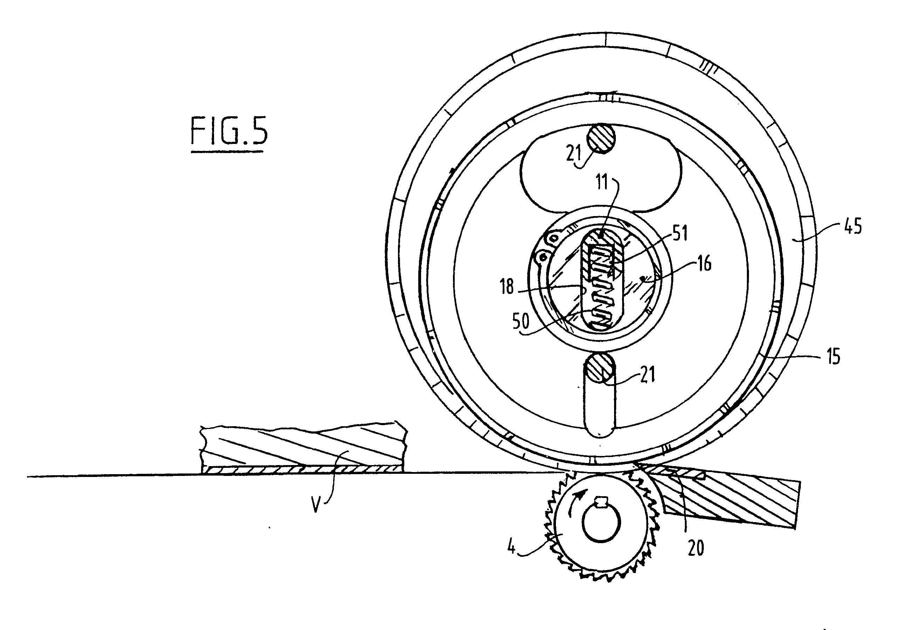

The pressure roller 10 is constructed, see fig. 2, of a number of disc-shaped bodies 15 which can move independently of each other in vertical sense in a manner further indicated below. Each disc-shaped body 15 is provided with a hub 16 which is mounted freely rotatably in the disc 15 by means of a bearing 17. The hub 16 is provided with a slotted hole 18 in which the roller shaft 11 embodied as a strip is received slidably and fitting in the breadth. The roller shaft 11 is embodied with a reduced diameter at both ends for reasons further indicated below and is fixedly attached with one end to a part of the frame of table 2. In this way the shaft 11 is disposed fixedly relative to the table 2 and in cross section the strip surface will always remain standing upright, see fig. 3. The height of the slotted hole 18 is such that the wheel 15 can make a sufficient movement in vertical direction, that is, a sufficient movement relative to the transport roller 4 to enable passage of a meat piece V, see fig. 3 and 4.

When the pressure roller 10 is non-driven the discs 15 will be freely rotatable about the hub 16 and the discs 15 may undergo free movement in vertical sense. When a meat piece V is supplied over the conveyor 3 the meat, whose skin side lies on the underside, will be gripped by the teeth of the transport roller 4 and be carried by the pressure roller 10 through the pinch between roller and the roll, wherein a knife beam 19 with cutting edge 20 situated behind the pinch cuts the skin side of the meat. It is noted that the knife beam 19 can be driven for reciprocal sliding in the frame 1 in order to assist the cutting action. For this purpose the knife beam 19 is driven for reciprocal movement in a guiding (not shown) in a direction parallel to the axis 5 of the transport roller 4.

In the embodiment shown the disc-shaped bodies 15 are however driven, which takes place by means of the means described hereinbelow.

These means consist of two parallel rods 21 which are set into head end strips 22 on either side. The end strips are each provided with a sleeve 22 which is rotatably mounted in the frame 1 of table 2 by means of a bearing 24. It is remarked that in this embodiment the end portion of the strip-like rod has a reduced diameter and is rotatably mounted in the sleeve 23. On the left in fig. 2 the sleeve 23 is mounted for free rotation about the reduced end portion of the rod 11.

The sleeve 23 is provided at the free end on the right in fig. 2 with a gear wheel 25 that is in engagement with gears in a transmission box 26, see fig. 1. The transmission in the box 26 is in turn driven by a gear 27 arranged on the axis 5. It is thus possible to set the rods 21 into rotation around the rod 11 in the direction of the arrow P3, see fig. 3.

Each disc-shaped body 15 is provided further with a slot-like opening 30 extending radially relative to the centre of the hub 16. The width of the slot-like opening 30 is equal to the thickness of the rod 21. Arranged in the disc-shaped body 15 diametrically opposite the slot-like opening 30 is a kidney-shaped opening 31 for receiving the opposite rod 21.

When the discs 15 are turned, that is, turned from the position of fig. 3 to that of fig. 4, the rod 21 at the bottom in fig. 3 will move to the right in fig. 4, wherein the disc-shaped body 15 is carried along. The opposing rod 21 has sufficient space in the kidney-shaped opening 31 to allow the disc 15 to move in vertical direction along the rod 11 and in addition to allow the rod 21 to revolve about the hub 16.

In this manner the transporting action for the piece of meat V between the transport roller 4 and the pressure roller 10 is considerably improved. The pressure action of the roller 10 on the piece of meat V can be improved by providing each disc-shaped body 15 with a pressure element 35 in the form of a pressure wheel 36 which runs over the periphery of the disc-shaped body. The pressure wheel 36 is arranged for free rotation in a fork 37 that is fixed to a fork bar 38 about which is arranged a spiral spring 39. This latter supports against the underside of a bracket-like strip 40 which is fixedly attached to the table 2. The bar 38 can move freely up and down via an opening 41. When the disc-shaped body 15 moves upward the spring 39, which exerts a downward oriented pressure force on the disc 15, the pressure line of which is oriented through the centre of hub 16, will thus be compressed.

According to a further feature of the invention a disc-shaped cutting knife 45 is arranged between two disc-shaped bodies 15, and in the embodiment shown there are two such knives, each between the second and third disc from the outside.

The periphery of the disc-shaped cutting knife 45 is greater than that of the disc-shaped bodies 15 such that the cutting edge 46 protrudes into a groove of the transport roller 4. Each cutting disc 45 is embodied with a relatively large central hole with a considerable clearance around the rod 11 and also with two holes 48 and 49 located diametrically of one another for receiving the rods 21. Turning of the rods 21 provides rotation of the disc-shaped cutting knives 45.

In this manner it is possible to cut a side strip V' of the meat piece V off the central portion. Thus created between the cutting knives 45 is a strip of meat with parallel sides and two irregularly shaped side strips V'.

With the machine according to the invention as described above it is possible to skin the irregular side strips V'. Due to the fact that the guiding of the side strips remains continually present during skinning because of the variable displacement of the disc-shaped bodies 15, no shifting outward occurs and skinning will therefore be able take place undisturbed.

In a particular embodiment it is possible not to skin the central meat portion by covering or removing the cutting edge of the knife beam 19.

Fig. 5 shows an alternative embodiment of the manner in which the disc-shaped bodies 15 are each pressed in the direction of the transport roller 4. Accommodated in the slot-like hole 18 of the hub 16 for this purpose is a pressure spring 50, the action of which is the same as that of the pressure spring 39. The one side of the spring here supports against the inside of the slotted hole 18 of hub 16, while the other side supports on the bottom 51 of a blind bore in the fixed rod 11. In this embodiment the pressure roller 36 with associated pressure spring 39 can therefore be omitted.

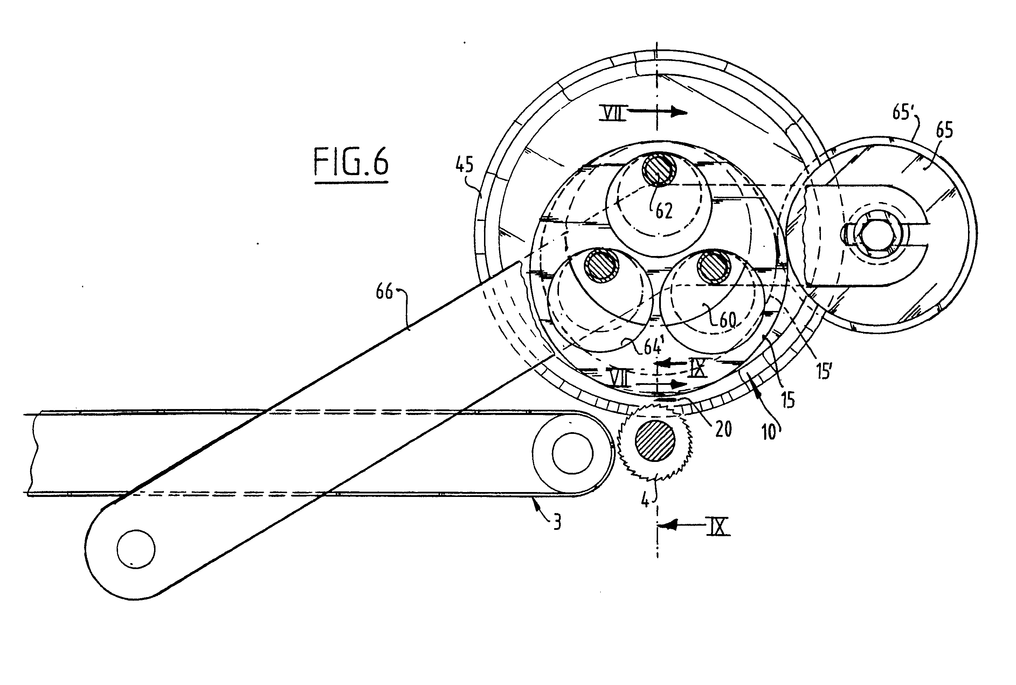

There now follows a description of the embodiment according to the figures 6-8, wherein the same reference numerals are used for the same elements in the machine.

The transport roller 4 in fig. 6 is thus placed connecting behind the feed belt 3. A pressure roller 10 is placed above the transport roller 4 and the cutting beam 20 is arranged in the pinch between the transport roller 4 and the pressure roller 10.

In this embodiment the pressure roller consists of a number of adjacently positioned disc-shaped bodies 15, which are held at mutual intervals by spacer discs 60. The disc-shaped bodies and the spacer discs are arranged between two end flanges 61 which are mutually connected by three rods 62 positioned at 120° intervals from each other. Arranged around the rods 62 are spacer sleeves 63, the function of which is further elucidated below.

The spacer discs 60 have three fitting holes so that the discs 60 remain in line with the flanges 61. The disc-shaped bodies 15 however have three holes of considerably greater diameter than that of the sleeves 63 so that the disc-shaped bodies 15 can undergo a displacement relative to the spacer discs 60 over a limited distance depending on the difference in diameter of the sleeve 63 and the diameter of the through-hole 64 in the disc.

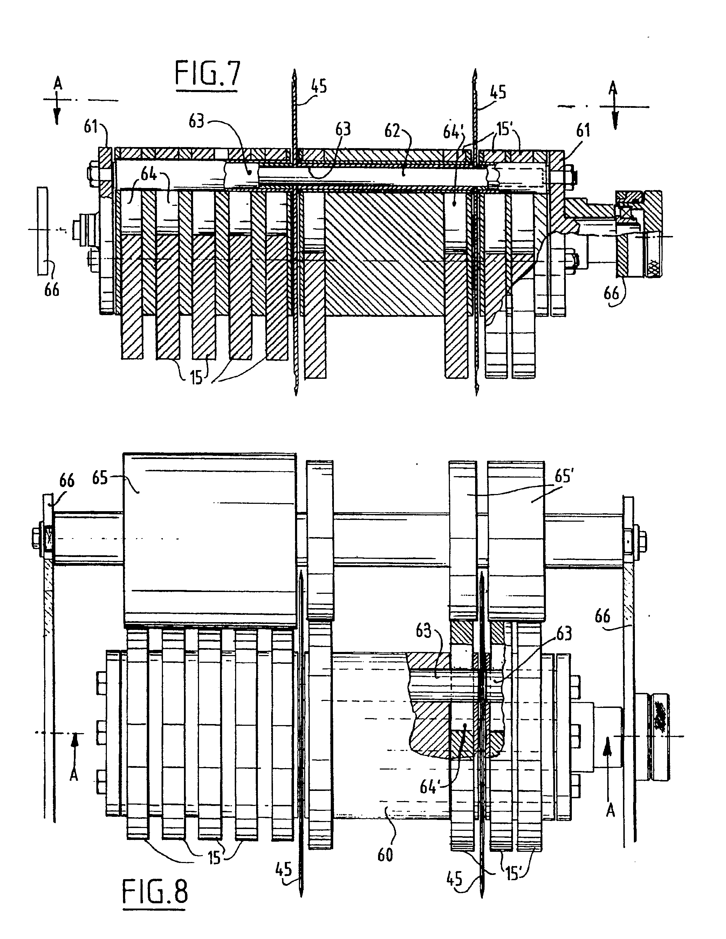

It is further noted that the disc-shaped bodies 15 on the left in fig. 7 have a smaller peripheral diameter than the discs 15' on the right in fig. 7. The diameter of the through-hole 64 in the discs on the left in fig. 7 is correspondingly smaller than that of the discs 15'. The large discs can therefore undergo a larger movement transversely of the axis direction than the small discs.

Finally, it is noted that in accordance with the embodiment of fig. 1 two cutting knives 45 are arranged between the disc-shaped bodies 15, which cutting discs are placed out of centre in the pressure roller 10. The precise position of the cutting knives 45 can be determined by adapting the length of the sleeves 63 on the rods 62, wherein the sleeves 63 serve as spacers.

In the embodiment according to fig. 6-8 the free movement of the disc-shaped bodies 15 relative to the axis of rotation A-A is limited by guide means, embodied here in the form of pressure rollers 65. The latter are arranged on a common shaft which is accommodated in two arms 66 which are suspended in the main frame for swivelling on the rotational axis A-A.

When a piece of meat with skin is fed between the pinch of the pressure roller 10 and the transport roller 4 the disc-shaped bodies 15 can move freely up and down in vertical sense, although they are obstructed in horizontal direction by the guide rollers 65. The disc-shaped bodies 15 can however move towards the front in the direction opposed to the transporting direction P1. The disc-shaped bodies 15 can adapt as in the embodiment of fig. 1 to the thickness of the meat, wherein the weight of the disc-shaped bodies determines the pressure applied to the meat piece. The rods 62 provide a rotary driving of each disc-shaped body 15 so that the desired transporting of the meat piece over the transport roller 4 is ensured.

Use can of course also be made in this embodiment of additional pressure elements such as the pressure roller 36 in fig. 3.

The operation of the machine is similar to that described with reference to fig. 1-5.

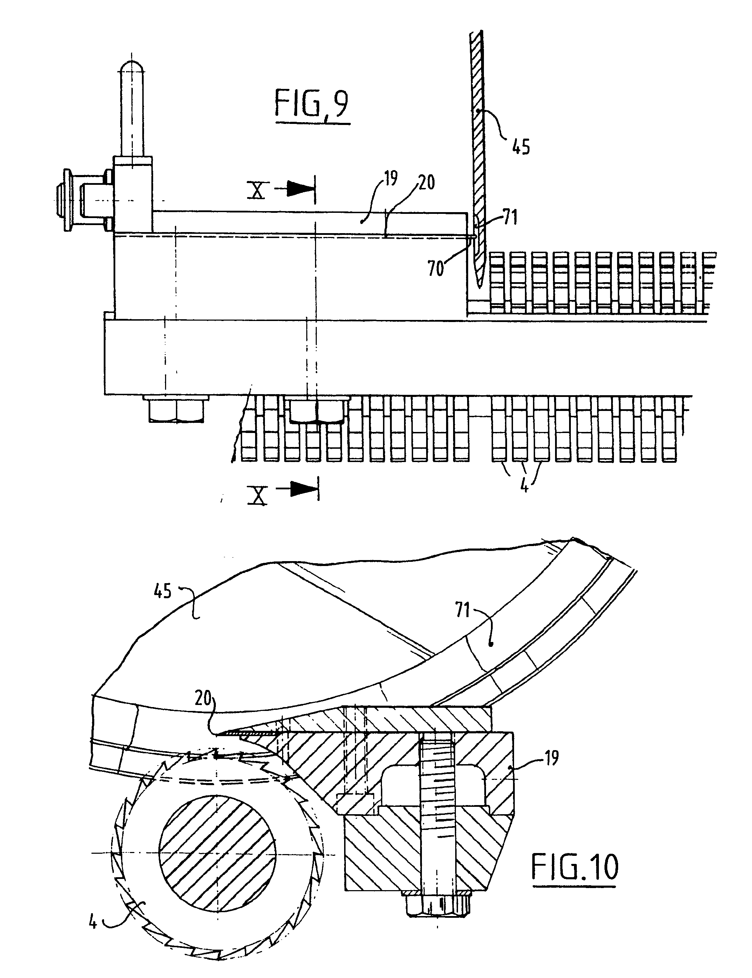

It is now noted that in figures 9 and 10 the knife beam 19 bears a knife edge 20, the side of which protrudes outside knife beam 19, see fig. 9, which side portion 70 protrudes into a groove-like recess 71 of cutting knife 45. Thus ensured is that the cutting edge 20 crosses or touches the incision made by the circular cutting knife 45 so that an exact cutting off of the skin of the meat piece is ensured.

It is also remarked with respect to this embodiment that the space between the cutting knives 45 is not provided with a cutting edge 20 so that the skin of that portion of the meat piece is not removed.

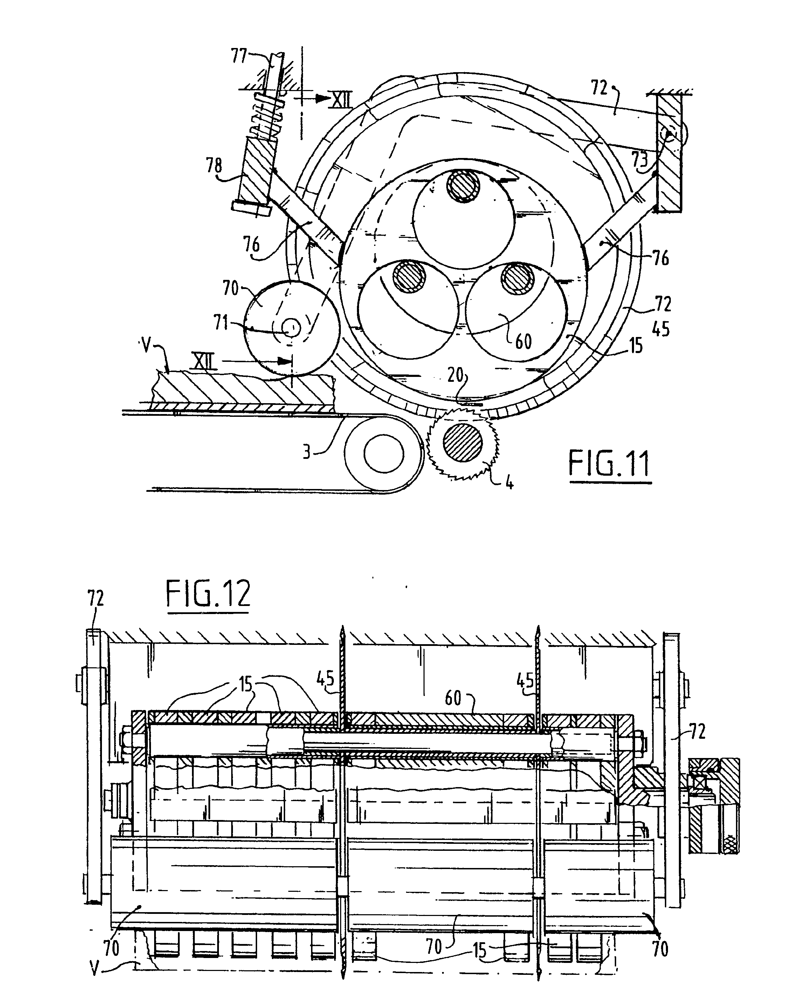

There now follows a description of the machine of fig. 11 and 12. The same reference numerals are used for the same elements as in the preceding figures.

The machine according to fig. 11 and 12 is distinguished by a feed element 70 in the form of a roller which is freely rotatable about a shaft 71. The shaft 71 is mounted at either end in a sub-frame 72, embodied here as two bent arms, which are connected on the other end to the main frame for pivoting on the shaft 73 at the rear of the pressure roller 15.

The roller 70 can consist of three separate roller bodies lying mutually in line, see fig. 11, or can be embodied with a recess 74 in the cylinder periphery for receiving the cutting edge 46 of the cutting disc 45. Such a roller ensures that the meat piece V does not deform in front of the pressure roller 15 and the cutting knives 45 as a result of cutting forces exerted thereon, whereby the meat piece can be lifted off the belt 3.

Another difference with the preceding embodiments is the replacement of the guide roller 65 for the disc-shaped bodies 15 shown in fig. 6. The guide means for these disc-shaped bodies 15 is formed here by a strip-like element 76, the lengthwise edge of which is held against the outer periphery of the disc-shaped bodies 15 in order to place them in the correct position. As additional guiding such a strip-like element 76' can also be arranged at the front. The strip-like element is accommodated fixedly or adjustably in the main frame but can also be attached via a carrier 78 arranged resiliently relative to the main frame and slidable along a pin 77.

The operation of the machine according to fig. 11 and 12 is similar to that described with reference to the fig. 1-5 and 6-8.

The invention is not limited to the above described embodiments.

## Claims

1. Machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch, **characterized in that** the pressure roller is constructed from a number of disc-shaped bodies, wherein the or each disc-shaped body is arranged for free up and down movement over a determined distance at least in vertical direction by means of one or more guide means.

2. Machine as claimed in claim 1, **characterized in**

that the or each disc-shaped body is arranged for free reciprocal movement over a determined distance in horizontal direction.

3. Machine as claimed in claim 1, **characterized in that** the hub is provided as guide means with a slotted hole in which a non-round rod forming the second axis is fittingly received.

4. Machine as claimed in claim 1, **characterized in that** as guide means is arranged a guide element co-acting with the outer periphery of the or each disc-shaped body.

5. Machine as claimed in claim 1, **characterized in that** as guide means the or each body is provided with at least one hole arranged eccentrically with respect to the hub, through which hole runs a rod-like member rotatable at a distance from the second axis.

6. Machine as claimed in claim 5, **characterized in that** at least two rod-like members are arranged which are driven rotatably on the second axis.

7. Machine as claimed in any of the foregoing claims, **characterized in that** at least one disc-shaped cutting knife rotatable about the second axis is arranged between two disc-shaped bodies.

8. Machine as claimed in claim 7, **characterized in that** the transport roller is provided with peripheral grooves into which protrudes the cutting edge of the disc-shaped cutting knives.

9. Machine as claimed in claim 3, **characterized in that** acting on the or each disc-shaped element is a pressure element whereof the line of pressure is oriented through the centre of the non-round rod.

10. Machine as claimed in claim 9, **characterized in that** the pressure element is formed by a spiral spring.

11. Machine as claimed in any of the foregoing claims, **characterized in that** the transport roller has a toothed periphery.

12. Machine as claimed in any of the foregoing claims, **characterized in that** the cutting beam is driven oscillating parallel to the transport roller.

13. Machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch and at least one disc-shaped cutting knife rotatable about a lying shaft, **characterized in that** in the side of the cutting knife at a distance from the outer periphery is arranged a groove-like recess for receiving the side of the cutting edge on the cutting beam.

14. Machine for skinning meat pieces, which machine comprises a transport roller driven rotatably about a first axis and a pressure roller co-acting with the roller and rotatable about a second axis parallel to the first axis, in addition to at least one cutting beam which is arranged relative to the feed-through direction of the meat piece behind the pinch between the roller and pressure roller and the cutting edge of which runs parallel to the pinch, **characterized in that** a feed element movable freely up and down is arranged relative to the feed-through direction of the meat piece at the front of the pressure roller.

15. Machine as claimed in claim 14, **characterized in that** the feed element has the form of a freely rotatable roller.

16. Machine as claimed in claim 15, **characterized in that** the periphery of the feed roller has a recess for receiving the cutting edge of the cutting disc.

17. Machine as claimed in any of the foregoing claims, **characterized in that** the roller is mounted in a sub-frame, which frame is pivotally coupled to the main frame about a lying axis located to the rear of the pressure roller.

FIG.1

FIG.2

EP 0 445 892 A1

FIG.4

FIG.3

FIG.5

FIG.6

EP 0 445 892 A1

## FIG.7

## FIG.8

## FIG.9

## FIG.10

FIG.11

FIG.12

European Patent
Office

## EUROPEAN SEARCH REPORT

Application Number

EP 91 20 0486

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | BE-A-549360 (MULLER)<br>* the whole document * | 1, 3,<br>9-12, 14 | A22C17/12 |
| A | NL-A-8702427 (BOEKEL)<br>* the whole document * | 1, 7, 8,<br>11, 13 | |
| A | US-A-1703217 (WATSON)<br>* page 1, left-hand column, line 43 - right-hand column, line 104 * | 1, 9,<br>10, 14,<br>15 | |
| A | US-A-2155730 (MILLER)<br>* page 1, right-hand column, line 16 - page 2, left-hand column, line 60 * | 1, 9, 10 | |
| A | US-A-2912027 (TOWNSEND)<br>* column 4, lines 33 - 48 * | 7, 8 | |
| A | US-A-2722255 (TOWNSEND)<br>* the whole document * | 1, 9, 11 | |
| A | EP-A-233454 (BAADER)<br>* claim 1 * | 12 | TECHNICAL FIELDS SEARCHED (Int. Cl.5 ) |
| P,A | NL-A-8901368 (MAVECO)<br>* page 3, line 32 - page 4, line 22 * | 1, 13 | A22C |
| A | FR-A-2057654 (TOWNSEND) | | |
| A | DE-C-687585 (STRAUSS) | | |
| A | US-A-1847536 (PRUEFER) | | |
| A | US-A-3298414 (RUNNELLS) | | |
| A | US-A-2839113 (TOWNSEND) | | |
| A | FR-A-2517932 (VARLET) | | |
| A | NL-A-7802906 (SCHILL) | | |

The present search report has been drawn up for all claims

| Place of search | Date of completion of the search | Examiner |
|---|---|---|
| THE HAGUE | 05 JUNE 1991 | DE LAMEILLIEURE D. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)

## EUROPEAN SEARCH REPORT

**European Patent Office**

Application Number

EP    91 20 0486
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2816744 (SCHILL) | | |
| | --- | | |
| A | US-A-3249139 (RUNNELLS) | | |
| | --- | | |
| A | US-A-2539692 (HICKMAN) | | |
| | --- | | |
| | ----- | | |

TECHNICAL FIELDS
SEARCHED (Int. Cl.5 )

The present search report has been drawn up for all claims

| Place of search | Date of completion of the search | Examiner |
|---|---|---|
| THE HAGUE | 05 JUNE 1991 | DE LAMEILLIEURE D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)